(19) Europäisches Patentamt
European Patent Office
Office européen des brevets

(11) **EP 0 657 021 B1**

(12) **EUROPEAN PATENT SPECIFICATION**

(45) Date of publication and mention
of the grant of the patent:
**16.04.1997 Bulletin 1997/16**

(21) Application number: **93919030.2**

(22) Date of filing: **24.08.1993**

(51) Int Cl.$^6$: **G01F 1/66**, G01F 25/00,
G01F 15/02, G01P 5/18

(86) International application number:
**PCT/DK93/00276**

(87) International publication number:
**WO 94/04890 (03.03.1994 Gazette 1994/06)**

(54) **FLOW METER**

DURCHFLUSSMESSER

DEBITMETRE

(84) Designated Contracting States:
**AT BE CH DE DK ES FR GB GR IE IT LI LU MC NL
PT SE**

(30) Priority: **25.08.1992 DK 1054/92
14.05.1993 DK 565/93**

(43) Date of publication of application:
**14.06.1995 Bulletin 1995/24**

(73) Proprietor: **KAMSTRUP A/S
DK-8230 Aabyhöj (DK)**

(72) Inventor: **BRÜMMER, Heinz, Kurt
DK-8220 Brabrand (DK)**

(74) Representative:
**Plougmann, Vingtoft & Partners A/S
Sankt Annae Plads 11,
P.O. Box 3007
1021 Copenhagen K (DK)**

(56) References cited:
**EP-A- 0 273 385        WO-A-93/04343
DE-A- 3 312 092        DE-B- 1 075 327
US-A- 4 164 865        US-A- 4 372 166**

• **DERWENT'S ABSTRACT, No. L0889 D/43, week
8143; & SU,A,792143 (KAUN POLY), 3 January
1981 (03.01.81).**

## Description

The present invention relates to a method of improving the accuracy of a measuring result obtainable by means of a flow meter of the type defining therein a flow passage for a medium flow to be measured, which flow meter comprises a sensor for sensing a varying condition of the medium flowing through the passage, means for generating ultrasonic signals and for directing such signals in opposite directions along at least part of the flow passage, means for receiving signals having passed along said at least part of the flow passage, and electronic circuit means for calculating or determining a measured flow rate value of the medium based on the difference in velocity of transmitting the ultrasonic signals in said opposite directions.

A flow meter of this type is disclosed for example in German patents Nos. 29 24 561, 29 34 031, and 30 39 710. As described in these patent specifications, various factors, such as varying acoustic loads on the ultrasound generating disc of piezoelectrical material at varying temperatures, undesired disturbing echoes of ultrasonic signals transmitted to a receiving transducer, and varying, uneven conditions of the flow into and out from the flow passage may adversely influence the accuracy of the measuring results to an unsatisfactory degree.

SU 792143 discloses a testing device for testing the accuracy of flow meters. This known testing device may simulate a flow rate, and the flow rate measured by the flow meter being tested is compared to the flow rate simulated. This known testing device renders it possible to draw graphs showing the absolute error of measurements in dependency of the temperature and pressure of the medium flow measured.

US-A-4164865, which is also referred to in US-A-4372166, in col.1-2, discloses a flowmeter operating on the principle of transmitting ultrasonic waves in upstream and downstream directions and using the difference in the velocities in these directions as the basis of the calculation of flow rate, and discloses the features of the preamble of claim 1. The circuit used employs an amplifier 156 (see col. 12, lines 35-59) delivering an output representative of the sound velocity (dependent of gas composition), which varies with temperature and pressure (see col. 2, lines 6-11). This output is compared with a (stored) value for the calibrating liquid and used to modify the flow rate measurement.

DE-A-3312092 discloses a main ultrasonic meter for the travel time measurement of flow rate and a reference path as a sensor for a condition value (the speed of sound in the medium). These measurements are combined in a computer to compensate the flow rate for variations in the speed of sound.

EP-A-0273385 discloses a flow meter using waves directed from a transmitter to two receivers in opposite diagonal directions. A condition sensor 23 delivers a pressure measurement signal 22 which is used to compensate the flow rate measurement ( based on phase difference) in circuit 21.

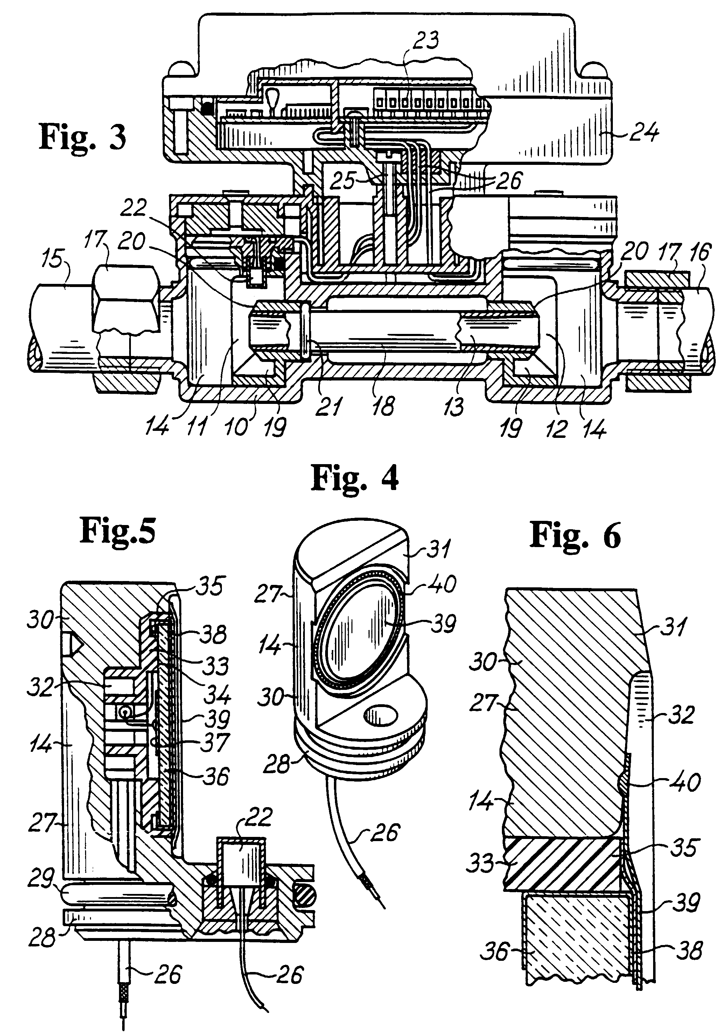

WO-A-9304343 discloses a system, which besides the basic ultrasonic flowmeter as claimed in claim 1, has temperature and pressure sensors 24, 26 (see page 7, first paragraph). Flowmeter and condition signals are available (see fig. 3 outputs).

US-A-4720800 does not mention the ultrasonic type of flowmeter, but refers to a simulation circuit for the calibration of the flowmeter (col. 9, lines 46-49). US-A-4372166 seems also to disclose calibration using simulated flow rates in which the frequency of the pulses is adjusted to perform the correction (see abstract), rather than reference to stored values.

In DE-A-1075327 a density value is obtained from transducer 30 and associated channel, and used to compensate the main flow meter measurement. Stored compensation values do not seem to be involved.

The accuracy of measuring results obtainable by means of a flow meter of the type described above may be improved by the method according to the invention, as defined in claim 1.

In the method according to the invention the difference between the measured flow rate value calculated and the corresponding actual flow rate value, which is known, is determined at a plurality of different values of said condition of the medium. These differences or first compensating values determined represent the errors caused by various factors, such as the factors mentioned above, and they may be used for compensating calculated measured values of unknown flow rates.

The predetermined flow rate course may represent any known flow rate varying in respect to time. In the preferred embodiment, however, the medium flow is passed through the flow passage at a predetermined constant flow rate, which means that the "predetermined flow rate course" is a predetermined flow rate which does not vary with respect to time. This constant flow rate may have any desired value. However, for the sake of simplicity it is preferred to determine the first compensating values at a predetermined flow rate value which is zero. This means that the medium, which may be liquid or gas, is enclosed within the flow passage, while the differences or first compensating values are being determined.

It is understood that the method according to the present invention relates to any condition influencing the measurements of the flow meter, and that the flow meter could be used for measuring the flow of any medium. In most practical cases, however, the said condition is the temperature and/or the pressure of the flowing medium, which is normally a liquid, such as water, with varying temperature.

When the first compensating values are to be determined, the medium within the flow passage may be heated to an elevated temperature, such as 90°C and thereafter allowed to cool. The measured flow rate values at said plurality of different condition values may then be calculated or determined by the electronic circuit means continuously or at short time intervals during such cooling, and each of the measured flow rate values is then compared with the actual flow rate value, which is preferably zero. In this manner it is possible to determine a compensating curve or a great number of first compensating values associated with various temperatures or pressures.

The conditions at which the first compensating values are determined may be sensed or measured by a condition sensor, such as a pressure or temperature sensor. Therefore, it is important that the condition sensor is correctly calibrated or adjusted. The condition sensor is preferably calibrated at least at two different condition values prior to calculating or determining measured flow rate values of the medium in the flow passage at different values of said condition. When the condition of the medium in the flow passage is the temperature of the medium, this may for example be done when the medium within the flow passage is being heated. As an example, the accuracy of the temperature sensor may be checked at two or more temperatures, for example at 40°C and 80°C.

Prior to determining the first compensating values the flow meter is preferably exposed to various extreme conditions simulating use of the flow meter. Thus, the medium within the flow passage may be exposed to widely varying temperature and/or pressure conditions for an extended period of time, such as a few or several days, whereby the flow meter may be "artificially aged" before the first compensating values are determined.

When first compensating values have been determined for the individual flow meter as described above and such compensating values or such compensating curve has been stored, for example in an electronic memory or storing circuit of the electronic circuit means, the flow meter may be used for measuring the flow rate value of an unknown medium flow through the flow passage. Such method of measuring may then include calculating or determining a measured flow rate value of an unknown medium flow through the flow passage based on the difference in velocity of transmission of the ultrasonic signals, measuring or sensing the actual condition of the medium in the flow passage by means of the condition sensor, and compensating the measured flow rate value of the unknown medium flow by the stored first compensating value associated with the condition value actually sensed or measured. This means that each flow meter may be artificially aged and subsequently tested so as to determine and store a set of individual first compensating values in the electronic circuit means of each individual flow meter before it is dispatched from the factory. This means that the electronic circuit means of each flow meter contains a set of temperatures and/or pressures and corresponding individually determined first correction or compensating values of the measured flow rate value calculated by the electronic circuit means.

As explained above the determination of the flow rate value of the medium is based on the difference in velocities of transmitting ultrasonic signals through the medium. However, such velocity of transmission may be dependent on the varying condition of the medium. Therefore, the measured flow rate value may preferably be further compensated by a second compensating value compensating for such dependency.

Each ultrasonic signal may be a pulse train, the flow rate value being determined by measuring the difference in time of detection of a pair of corresponding pulses in said trains, identical pulse trains being simultaneously emitted from oppositely arranged signal generating means.

In order to increase the accuracy of measurement the measured flow rate value is preferably calculated or determined on the basis of a predetermined plurality of successive measurements of said difference in time of detection. Furthermore, the measured flow rate value may be calculated or determined on the basis of the sum of said plurality of successive measurements. The number of successive measurements may be chosen in dependency of the flow rate being measured. Thus, the number of successive measurements may be reduced when the flow rate measured is increased. An initial test measurement of the flow rate may be used for determining the predetermined plurality of successive measurements of the difference in time of detection.

The invention also relates to a flow meter as defined in claim 17.

The fluid flow, such as a flow of hot water, through the flow passage should preferably be as uniform as possible over the cross-sectional area and along the length of the flow passage. In order to improve such uniformity of flow the cross-sectional area of the flow passage may be substantially constant, the cross-sectional area of an inlet end portion of the flow passage decreasing slightly in downstream direction towards said constant value. Such inlet end portion, which may define a frusto-conical inner surface part, may function as a kind of funnel. Alternatively or additionally, the cross-sectional area of an outlet end portion of the flow passage may increase slightly from the constant area in the downstream direction.

According to the invention at least one of the ultrasound generating and/or receiving means may comprise an electronic transducer including a housing made from metal, such as stainless steel, and defining an annular abutment surface, a vibrateable disc member made from a piezoelectrical material, and means for mounting the disc member in said housing so that a peripheral rim portion of the disc member and the annular abutment surface are positioned in overlapping relationship. The disc member may be mounted in any suitable manner. As an example, the mounting means may comprise means for biassing the disc member towards the annular abutment surface.

The biassing force used is preferably, but not necessarily, sufficient to maintain the piezoelectrical disc member in the position in which it is mounted in relation to the housing.

The area of the abutment surface overlapped by the peripheral rim portion of the disc member preferably exceeds half the area of the disc member.

Such relatively large area of overlap ensures that the specific pressure to which the peripheral part of the disc member is exposed may be kept within acceptable limits.

Alternatively or additionally, the mounting means may comprise an adhesive by means of which a peripheral rim portion of the disc member is sealed to the annular abutment surface, whereby it is ensured that the disc member is substantially immoveable in relation to the abutment surface of the housing.

The disc member may be received in an insert member of a non-metallic material, the insert member comprising a plane annular wall part, which is sandwiched between the annular abutment surface and an adjacent side surface of the disc member, and a peripheral, cylindrical wall part having its outer surface engaging with an inner cylindrical surface part of the housing and having its inner surface engaging with a peripheral rim surface of the disc member. The peripheral surface of the piezoelectrical disc member may also be in contact with an annular flange part of the insert member, and such contact may vary from one transducer to another and be dependent on temperature because of the different coefficients of expansion of the materials from which the piezoelectrical disc member and the insert member, respectively, are made.

The biassing means may comprise a sheet member of metal, such as stainless steel, having its inner side surface fixed to the adjacent side surface of the disc member, for example by an adhesive or a glue, and having its peripheral rim portion fixed to said housing, for example by welding. Such sheet member may maintain the piezoelectrical disc member in the same position in relation to the abutment surface and at the same time provide the necessary bias against such surface. Such bias may be obtained by prestressing the metallic sheet member axially before welding the diaphragm-like sheet member to the housing.

The peripheral rim portion of the metallic sheet member is preferably fixed to the housing so as to completely seal the inner of the housing containing the disc member. When the disc member is fastened not only to the metallic sheet member, but also to the annular abutment surface, for example by an adhesive, the sealed transducer may be made capable to resist or withstand substantial outer pressure variations. When the disc member is fastened to the annular abutment surface the prestressing of the metallic sheet member is less necessary than when the disc member is not fastened to the annular abutment surface.

The ultrasound generating and receiving means may comprise a pair of transducer units arranged in inlet and outlet chambers, respectively, said chambers being interconnected by the flow passage having an axial length being several times larger than the distance from the transducers of the transducer unit and the walls of the respective inlet or outlet chamber. It may thereby be prevented that ultrasonic signals generated by one of the transducers are reflected by the chamber walls and returned to said transducer at substantially the same time as when signals are received from the other transducer. The ultrasound transducers are preferably of the type comprising a piezoelectrical disc for generation and detection of ultrasonic signals.

The invention will now be further described with reference to the drawings, in which

Fig. 1 diagrammatically illustrates the function of a fluid flow meter of the type including a pair of ultrasound transducers,

Fig. 2 is a graph showing the velocity of ultrasonic waves in water as a function of the temperature of the water,

Fig. 3 is a side view and partially sectional view of a first embodiment of the apparatus or flow meter according to the invention,

Fig. 4 is a perspective view of a transducer unit forming part of the apparatus shown in Fig. 3,

Fig. 5 is a side view and partially sectional view of the transducer unit shown in Fig. 4,

Fig. 6 is a fragmentary sectional view of the transducer unit according to Fig. 4 and 5 shown in an enlarged scale,

Fig. 7 is a side view and partially sectional view of a second embodiment of the apparatus or flow meter according to the invention,

Fig. 8 is top plan view of the flow meter shown in Fig. 7 where a part has been cut away for illustrative purposes,

Fig. 9 is a block diagram of the fluid flow meter illustrated in Figs. 1 and 3-6, and

Figs. 10 and 11 are curves showing flow rate compensating values as a function of fluid temperature and plotted for two individual fluid flow meters according to the invention.

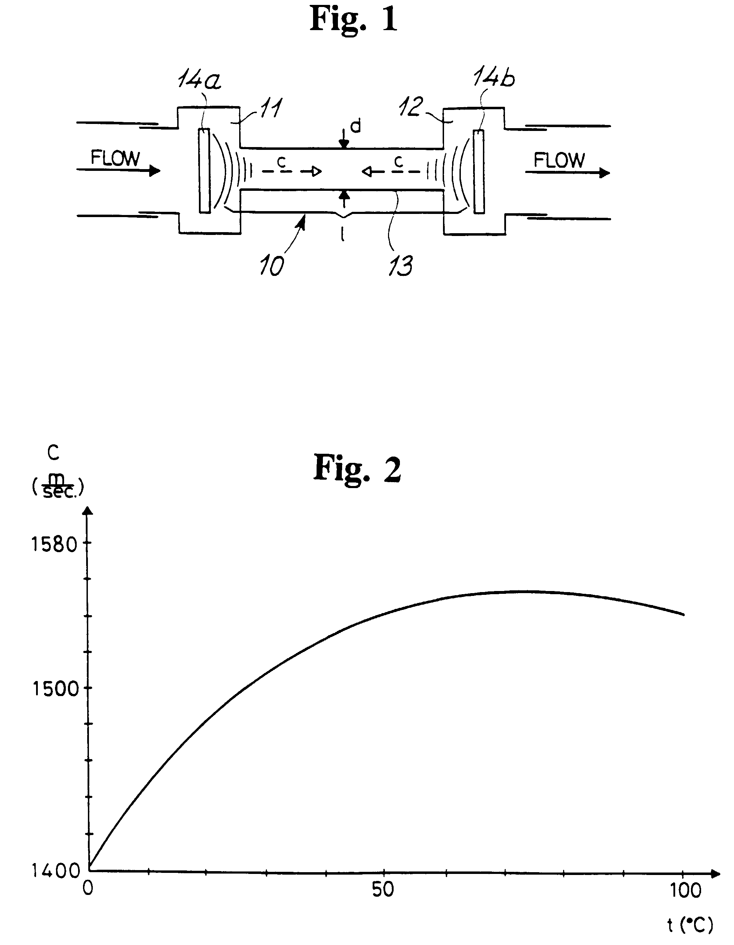

Fig. 1 diagrammatically illustrates how a fluid flow may be measured by means of ultrasound transducers. Fig. 1 illustrates a flow meter comprising a housing 10 defining inlet and outlet chambers 11 and 12, respectively, which are interconnected by a flow passage 13. A pair of ultrasound transducers 14a and 14b are arranged in the inlet and outlet chambers 11 and 12, respectively, opposite to the adjacent ends of the flow passage 13. Each of the ultrasound transducers may act as an ultrasound emitter as well as an ultrasound detector.

When a fluid flows from the inlet chamber 11 to the outlet chamber 12 through the flow passage 13 the fluid flow in the flow passage may be measured. When such flow measurement is performed the two transducers 14a and 14b simultaneously emit a train of ultrasonic pulses in opposite directions, which means that a train of pulses is emitted upstream as well as downstream of the fluid flowing through the flow passage 13.

After the emission of such train pulses and before the pulses reach the opposite transducer the mode of operation of both transducers is changed from an emitting mode to a detecting mode so that each of the transducers 14a and 14b may detect the pulses emitted from the opposite transducer. The ultrasonic pulses emitted by the transducer 14b and travelling upstream the fluid flowing through the flow passage 13 are delayed compared to the pulses emitted by the transducer 14a and travelling downstream the fluid flow. This time delay $\tau$ may be used for determining the fluid flow through the passage 13.

When the flow passage 13 is defined by a circular cylindrical surface having a diameter d, the cross-sectional area of the flow passage is

$$A = (\pi \times d^2)/4.$$

If the velocity of the ultrasonic pulses through the fluid is C, and the axial spacing of the transducers 14a and 14b is 1, the time delay of the ultrasonic pulses directed upstream of the fluid flow may be expressed as

$$\tau = (F \times 2 \times l)/(C^2 \times A),$$

where F is the fluid flow through the flow passage 13. This means, that

$$F = \tau \times (C^2 \times A)/(2 \times 1).$$

Consequently, if the time delay $\tau$ is measured the fluid flow through the flow passage 13 may be calculated.

As the time delay $\tau$ is rather small and thus difficult to measure accurately, this delay is preferably detected for each of the pulses of a train of pulses and then summed and amplified so that a resulting delay pulse $\Delta T$ of a reasonable length may be obtained. It is understood that the fluid flow is also proportional to such resulting delay pulse. In case the flow is small the delay pulse may be measured for a train of for example 24 pulses, in case of an average flow the delay pulse may be measured for a train of for example 12 pulses, and in case of a high fluid flow the delay pulse may be measured for a train of for example 6 pulses. By measuring the delay pulse for a number of train pulses dependent on the flow value, the dynamic range of the flow meter may be increased by a factor of four.

From the above equation it is apparent that the flow F is proportional to the square of the velocity of the ultrasonic waves in the liquid. As the velocity of the ultrasonic waves is dependent on the temperature of the fluid, it is necessary to measure the temperature of the fluid flowing through the flow passage 13 so that the temperature dependency may be taken into account.

The flowing fluid being measured may be any gas or liquid, and for each individual fluid to be measured the velocity C of ultrasonic waves in such fluid may be plotted versus the temperature of the fluid. As an example, a graph showing the velocity of ultrasound waves in water plotted as a function of the water temperature is shown in Fig. 2.

Figs. 3-6 illustrate a first embodiment of the fluid flow meter according to the invention diagrammatically shown in Fig. 1. In the embodiment shown in Fig. 3 the housing 10, which is preferably made from metal, defines the inlet and outlet chambers 11 and 12 therein, and these chambers may be detachably connected to inlet and outlet conduits 15 and 16, respectively, for example by means of threaded connection means, such as threaded nuts 17. In Fig. 3, the flow passage 13 is defined by the bore of a connecting tube section 18, which is mounted in the housing 10 by means of a pair of mounting elements 19 so that the opposite free ends of the tube section 18 projects into the inlet and outlet chambers 11 and 12, respectively. The inner diameter of the tube section 18 has a substantially constant value along the main part of the length of the tube section. However, the inner bore of the tube section may be slightly conical at the free ends of the tube section 18 so that the inner diameter is slightly increasing from said constant value towards the adjacent outer free end of the tube section. While the connecting tube section 18 is preferably made from stainless steel the mounting elements 19 may be made from a plastic material, such as NORYL®. Each of the mounting elements 19 may comprise a sleeve-like part snugly surrounding the adjacent projecting end portion of the tube section 18, and the annular outer end surface of each sleeve-like part may be chamfered or bevelled as shown at 20 in Fig. 3. Furthermore, an annular outer sealing element, such as an O-ring 21, engaging with the outer surface of the tube section 18 may be positioned in engagement with an annular abutment shoulder defined in the housing 10 and an adjacent annular end surface of one of the mounting elements 19.

An ultrasound transducer unit 14 shown in more detail in Figs. 4-6 and each including one of the transducers 14a or 14b is mounted in each of the inlet and outlet chambers 11 and 12 so that the transducers therein are arranged opposite to the adjacent open ends of the tube section 18, and the transducer units 14 are held in position within the inlet and outlet chambers 11 and 12 by means of the mounting elements 19. The flow meter further comprises a temperature sensor 22 for sensing the temperature of a fluid flowing into the flow meter via the inlet conduit 15. The temperature sensor 22 may be arranged within or adjacent to the inlet chamber 11 and is preferably forming part of the transducer unit 14 arranged therein, vide Fig. 5.

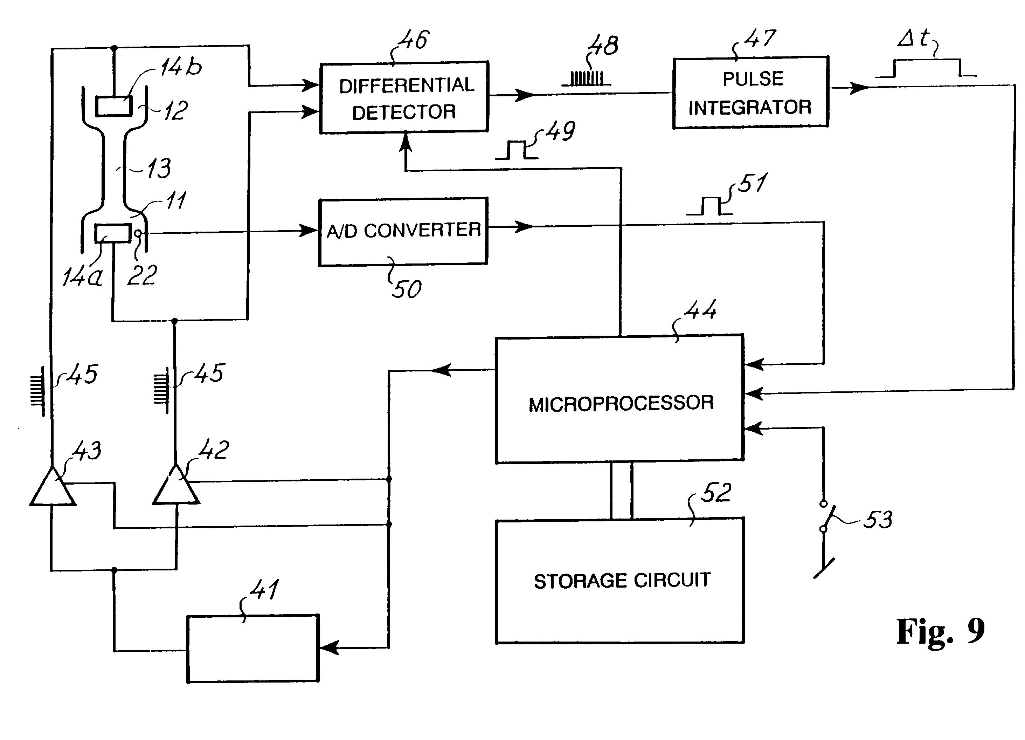

The fluid flow meter illustrated in Figs. 3-6 further comprises an electronic circuitry 23 arranged in a circuitry housing 24, which is mounted on the housing 10, for example by releasable fastening means, such as one or more fastening screws 25. The electronic circuitry 23, which will be further described below with reference to Fig. 9, is electrically connected to the transducers 14a and 14b and to the temperature sensor 22 by means of electrical conductors 26, so that the electronic circuitry 23 may receive electrical signals from the temperature sensor 22 and from the transducers 14a and 14b and transmit signals to these transducers.

As shown in Figs. 4-6 each of the transducer units 14 comprises a stiff transducer block, which is preferably made from metal, such as stainless steel. The transducer block may comprise a substantially cylindrical portion 28 having an outer peripheral channel for receiving an annular sealing ring, such as an O-ring 29, and a semi-cylindrical part 30 extending axially therefrom. The semi-cylindrical part 30 defines a flat, substantially diametrically extending surface 31 having a transducer receiving recess 32 formed therein. The cylindrical base portion 28 of each of the transducer units 14 is received in the inlet or outlet chamber 11 or 12 so that the O-ring 29 is in sealing engagement with the adjacent inner wall part of that chamber and the flat surface 31 is arranged opposite to the adjacent free end of the tube section 18, vide Fig. 3.

An insert member 33, which is preferably made from plastic material, such as NORYL®, is arranged within the recess 32 and defines an outer, plane, annular abutment surface 34 and a peripheral rim or flange portion extending transversely outwardly therefrom. The insert part defining the abutment surface 34 and the peripheral flange portion 35 are preferably rigidly supported by complementary surface parts defining the transducer receiving recess 32. A vibratable disc or plate 36, which is made from a piezoelectrical material and having metallic electrodes 37 and 38 adhered to its opposite side surfaces in a manner known per se is supported by the annular abutment surface 34. The outer diameter of the disc or plate 36 substantially corresponds to the inner diameter of the rim or flange portion of the insert member 33 so as to obtain a fit allowing an easy mounting of the disc or plate 36 in the insert member 33. The area of the outer rim portion of the disc or plate 36 supported by the plane abutment surface 34 preferably amounts to a value which is about half and even more than half the total area of the inner side surface of the disc or plate 36. The outer side surface of the disc or plate 36 or the electrode 38 covering the same is fastened to a thin plate or diaphragm 39, for example by means of an adhesive or glue. The outer annular rim portion of the diaphragm 39, which is preferably made from metal, such as stainless steel, is prestressed by exerting a pressure thereto directed axially inwardly into the recess 32 and, subsequently, the free edge portion of the diaphragm 39 is fixed to the semi-cylindrical portion 30, for example by a welding seam 40.

The plate or diaphragm 39 should have a thickness sufficient to prevent the disc or plate 36 from moving substantially in radial direction in relation to the abutment surface 34 or to the peripheral flange portion 35. As an example, the diaphragm 39 may be made from stainless steel and may have a thickness of about 50 μm.

It would be possible to modify the transducer unit 14 shown in Figs. 4-6 and described above in various manners. As an example, the peripheral rim portion of the disc or plate 36 may be fastened directly to an annular abutment surface formed on the stiff metallic transducer block by means of a suitable adhesive. When the inner side of the disc or plate 36 is fastened directly to the metallic transducer block and the outer side surface of the disc or plate 36 is also fastened to the diaphragm 39 a sealed transducer unit which is able to resist relatively high pressure variations may be obtained.

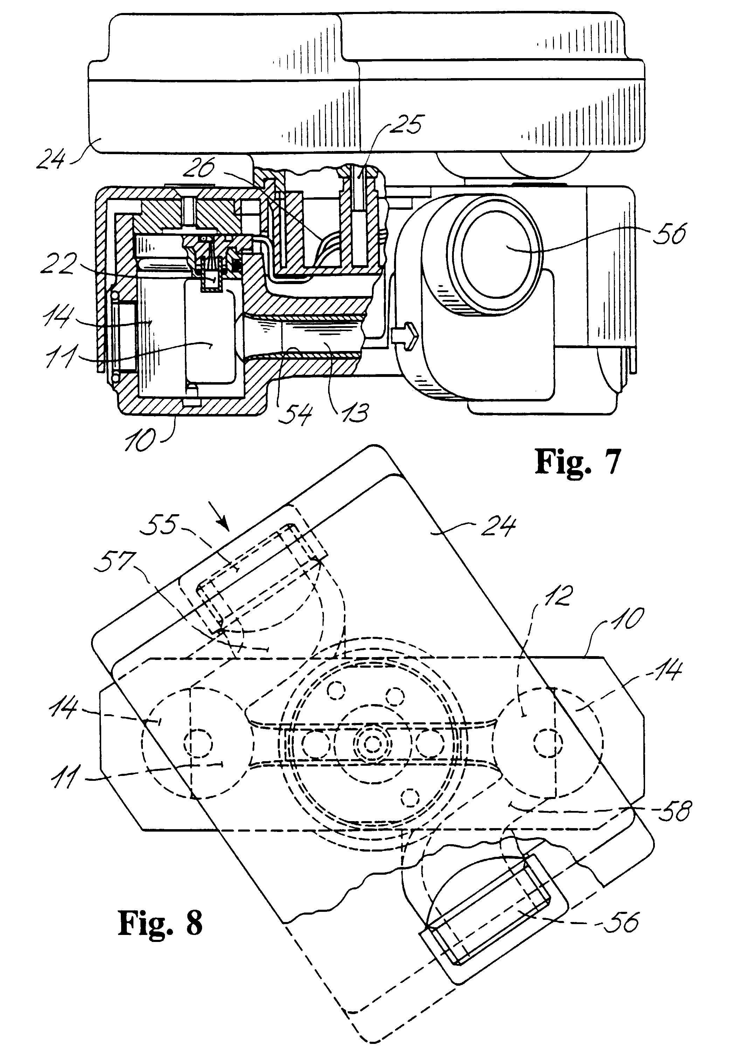

In the embodiment shown in Fig. 7 and 8 apparatus parts corresponding to parts of the embodiment shown in Figs. 3-6 have been designated similar reference numerals. In Fig. 7 and 8 the flow passage 13 is defined by a bore in the housing pulses 45 are transmitted to the transducers 14a and 14b when ultrasound pulses are to be emitted thereby. The pulses generated by the oscillator 41 are preferably 1 Mhz squarewave signals. As explained above, the transducers 14a and 14b may be switched between ultrasound generating and detecting modes, and this may be obtained by activating and deactivating the oscillator 41 and/or the amplifiers 42 and 43 by means of the microprocessor 44. In their detecting mode, each of the transducers 14a and 14b detects the ultrasound pulse trains emitted by the opposite transducer so as to determine the time delay or phase difference of the ultrasound pulse train moving upstream through the flow passage 13 compared with the downstream pulse train. This time delay or phase difference determined at the detecting mode of the transducers 14a and 14b are detected by a differential detector 46 connected to a pulse integrator 47, in which the time delay pulses 48 received from the detector 45 are added and amplified whereby a delay pulse ΔT proportional to the liquid flow through the flow passage 13 is obtained. The value of the amplification factor of the pulse integrator 47 is preferably near to 2000.

The microprocessor 44 may transmit a control signal 49 to the differential detector 46 so as to determine the number of time delays to be detected by the differential detector 46 to be used for determining the delay pulse ΔT. The microprocessor 44 may also determine the value of width of this delay pulse on which the calculation of the fluid flow is based. The temperature sensor 22 which is arranged within the inlet chamber 11 is connected to an analogue/digital converter 50 from which information about the temperature of the fluid flowing through the flow passage 13 is transmitted to the microprocessor 44 as a digital signal 51. The temperature sensing circuitry may also comprise a reference resistor (not shown) in order to obtain a circuitry which is self calibrating with respect to the measured temperature of the fluid. 10 interconnecting the inlet and outlet chambers 11 and 12. The inner surface of the bore is in tight engagement with a tubular lining 54, which may, for example, be made from stainless steel or another suitable material defining a sufficiently smooth inner surface in the flow passage 13. The lining 54 does not extend into the inlet and outlet chambers 11 and 12 so that the mounting element 18 of the first embodiment shown in Fig. 3 is dispensed with. In the embodiment shown in Fig. 3 the flow passage 13 and the inlet and the outlet conduits 15 and 16 have a common longitudinal axis coinciding with the longitudinal axis of the flow passage 13. In the embodiment of Figs. 7 and 8, however, a liquid inlet 55 and a liquid outlet 56 have a common axis defining an acute angle with the longitudinal axis of the flow passage 13, and the liquid inlet 55 and outlet 56 are connected with the inlet and outlet chambers 11 and 12, respectively, by means of curved connecting passages 57 and 58. This means that liquid flowing from the inlet 55 to the outlet 56 has to follow a tortuous path formed by the connecting passages 57 and 58, the inlet and outlet chambers 11 and 12, and the flow passage 13. As shown in Fig. 8 the circuitry housing 24 has a substantially rectangular outline, and the longitudinal axis of the rectangular housing 24 may be positioned substantially in a vertical plane containing the axis defined by the inlet 55 and the outlet 56.

Fig. 9 is a block-diagram of the electronic circuitry 23 contained within the circuitry housing 24 of the fluid flow meters shown in Figs. 3-6 and in Figs. 7 and 8, respectively. As explained above, liquid such as water or another fluid may be passed through the flow passage 13 and the inlet and outlet chambers 11 and 12 in which the ultrasound transducers 14a and 14b are arranged. The transducers are electrically connected to an oscillator 41 via amplifiers 42 and 43, and the oscillator 41 as well as the amplifiers 42 and 43 are controlled by a processor, such as a microprocessor 44 so that the oscillator generates trains of voltage pulses which are amplified by the amplifiers 42 and 43, and the amplified Information about the temperature dependency of the ultrasound velocity represented by the graph shown may be stored in a storage element or circuit 52, such as a PROM, EPROM, E$^2$PROM or any other similar memory circuit. This storage circuit is connected to the microprocessor 44 so that this temperature dependency may be taken into account when the fluid flow through the flow passage 13 is calculated based on the determined delay pulse $\Delta$T.

In order to obtain substantially the same accurate measurements by means of all of a plurality of fluid flow meters of the above type, such flow meters must be produced very accurately with small tolerances. It is especially important that the piezoelectric disc or plate 36 is arranged and retained very accurately in relation to its seat on the transducer block 27 in all of the flow meters produced, which substantially increases the manufacturing costs of each flow meter.

According to the present invention a compensating or correction value compensating for individual characteristics or deviations are determined for each single flow meter as a function of the temperature of the fluid being measured. Thereby it is possible to obtain very accurate measurements by means of the fluid flow meters according to the invention without the necessity of producing the flow meters with the great care and accuracy required in connection with the production of known flow meters of the type in question. As an example, the same accurate measurements may be made by means of various samples of the flow meter according to the invention in which the piezoelectrical disc or plate is arranged in different positions in relation to the peripheral flange portion 35 of the insert member 33. Thus, in some cases the peripheral surface of the piezoelectrical disc 36 may be in abutting engagement with the peripheral flange portion 35 of the insert member 33 along more or less of the peripheral length, and as the piezoelectrical material of the disc or plate 36, the plastic insert member 33, and the metallic transducer block 27 will expand and contract differently with varying temperature the peripheral edge portion of the disc or plate 36 is pressed into engagement with the flange portion at a pressure varying with the temperature. In other cases the piezoelectric disc or plate 36 may be radially spaced from the peripheral flange portion 35 of the insert member 33 at least for a certain temperature range. This means that the ultrasonic vibrations of the piezoelectrical disc 36 of the transducers 14a and 14b may vary with the temperature of the fluid passing the transducers.

Such individual differences and temperature dependent flow irregularities of the various samples of fluid flow meters produced may be taken into account by generating and storing compensating or correction values at different temperatures for each individual flow meter manufactured. For this purpose each fluid flow meter comprises a switch 53 (Fig. 9) which may be activated so as to bring the microprocessor 44 into a test mode. The testing or calibrating procedure at which the compensating or correction values are determined for various temperatures and stored in the storage circuit 52 may, for example be performed as follows:

To begin with the temperature sensor 22 is calibrated by providing a flow of water (200 litre/hour) through the flow passage 13, while the water in the flow is gradually being heated from room temperature to 90°C, typically over a time period of 1 hour. When the temperature of the flowing water is 40°C and 80°C, respectively, a signal is transmitted to the microprocessor 44. These temperatures are then related to the output signals received from the temperature sensor 22 when the 40°C and the 80°C signals are received, respectively. Based on information about the linearity of the temperature sensor 22 the microprocessor may translate the output signals received from the temperature sensor into correct temperatures.

Now, the switch 53 is activated to place the microprocessor 44 in the test mode, and water or another liquid heated to the high operational temperature of the flow meter, such as 90°C, is circulated through the flow passage 13 at a known flow rate, which is preferably constant during the testing procedure. In the preferred embodiment the flow rate of the liquid or water is zero, which means that the inlet and outlet chambers 11 and 12 and the interconnecting flow passage 13 are filled with the water while the inlet to the inlet chamber and the outlet from the outlet chamber are sealed or closed. From the maximum temperature, such as 90°C, the liquid or water within the flow meter is allowed to cool slowly to room temperature and possibly to a lower temperature. During such cooling the temperature of the liquid is measured frequently and the flow through the flow passage 13 is simultaneously measured by the flow meter, and the values measured at the various temperatures are detected and stored in the storage circuit 52. As the actual fluid flow through the flow passage is of a known constant value, preferably zero, any measured value deviating therefrom represents a correction or compensating value for the specific temperature or small temperature range at which the flow measurement was performed. Typically, correction or compensating values are determined for every 1/2°C from 90°C to room temperature. The correction or compensating values which have been determined in this manner and stored in the storage circuit 52 may be used to compensate for any of the temperature dependent errors, such as temperature dependent echoes of the ultrasonic waves from the apparatus wall parts, temperature sensitivity of the ultrasound transducer or any other temperature dependent error of the apparatus including the electronic circuitry.

It should be understood that the correction or compensating errors determined as a function of temperature within the temperature range in which the apparatus or flow meter may operate are determined individually for each flow meter or apparatus, which means that graphs showing the corrections or errors as a function of temperature within the temperature range of operation are different for different flow meters.

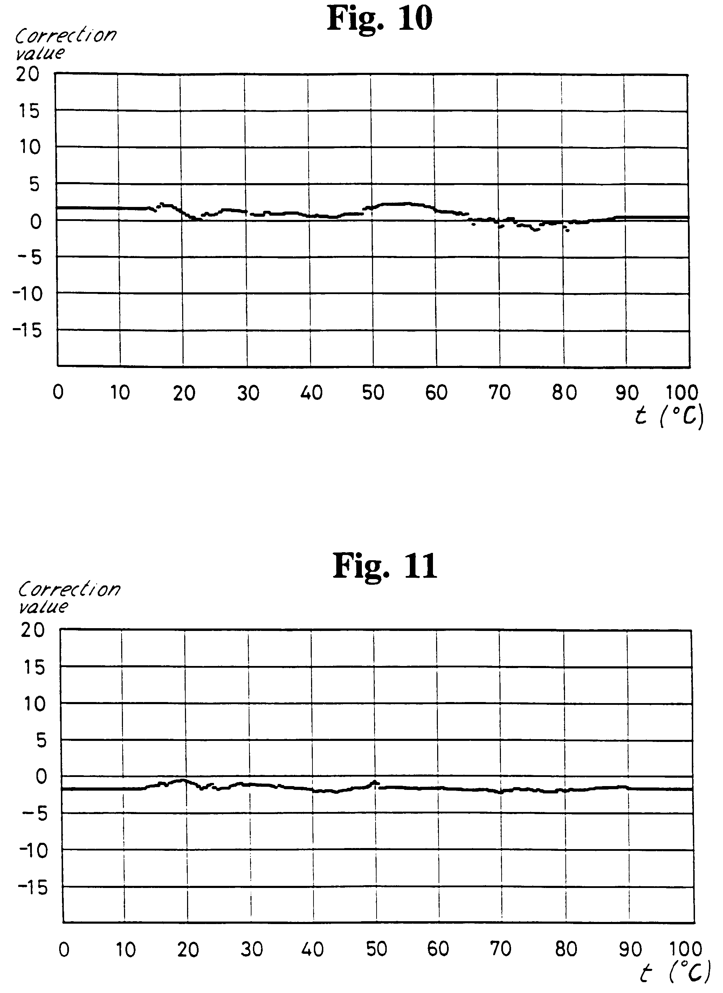

However, the storage circuit 52 of each flow meter has its individual correction curve or corresponding correction values stored therein. Figs. 10 and 11 are curves or graphs showing flow rate compensation values plotted as a function of the temperature of the fluid flowing through the fluid passage 13 for two individual flow meters of the same embodiment.

When the test program described above has been completed for a flow meter the switch 53 is deactivated to cause the microprocessor 44 to operate in its normal mode of operation. The flow meter is now ready for use in correct measurements of the flow of a fluid passing through the flow passage 13.

During the calibrating or testing procedure as well as during actual flow measurement the operation of the apparatus is controlled by the microprocessor 44. Thus, during the calibrating procedure the processor 44 controls the emission and detection of ultrasound pulse trains by means of the transducers 14a and 14b, calculation of the measured flow or correction value (when the flow is zero) based on the time delay signal received, storing the correction value and the corrected temperature value based on the temperature signal received from the temperature sensor at the same time, and repeating such procedure at a predetermined temperature range, such as 1/2°C. During the normal measuring mode the microprocessor 44 controls the emission and detection of ultrasound pulse trains by means of the ultrasound transducers 14a and 14b, calculation of the measured fluid flow value based on the time delay signal received from the pulse integrator, and correction of the measured fluid flow value based on the temperature pulse received from the temperature sensor 22 and the correction graph or values stored in the storage circuit 52. The corrected measured flow value thus obtained may be displayed by a display or printer not shown.

The fluid flow meter according to the invention may not only be used for measuring the fluid flow through the flow passage of the meter but also for other measurements based on such fluid flow measurement. As an example, the flow meter according to the invention may be used for determining heat consumption of a unit, such as an apparatus, an apartment, or a building to which a flow of hot water or another liquid is supplied. By measuring the fluid flow through the unit and the inlet and outlet temperatures of the unit the heat consumption within the unit may be determined.

## Claims

1. A method of improving the accuracy of measuring results obtainable by means of a flow meter of the type defining therein a flow passage (13) for a medium flow to be measured, which flow meter comprises a sensor (22) for sensing a varying condition of the medium flowing through the flow passage, means (14) for generating ultrasonic signals and for directing such signals in opposite directions along at least part of the flow passage (13), means (14) for receiving signals having passed along said at least part of the flow passage, and electronic circuit means (23) for calculating or determining a measured flow rate value of the medium based on the difference in velocities of transmitting the ultrasonic signals in said opposite directions, the circuit means (23) comprising means (44) for compensating the calculated or determined measured flow rate value, characterized in that

said circuit means (23) further comprises a memory (52) for storing a plurality of first compensating values for different values of said condition,

said compensating means is arranged to compensate the calculated or determined measured flow rate value by the first compensating value associated with the condition value sensed, and

said first compensating values are determined by providing a medium flow according to a predetermined flow rate course, in which the flow rate may be constant or vary with time, through the flow passage (13), while varying said condition of the medium in the flow passage (13), calculating or determining by the electronic circuit means (23) measured flow rate values of the medium in the flow passage at each of a plurality of different values of said condition,

determining for each of said condition values a first compensating value being the difference between the corresponding flow rate value according to said predetermined course, in which the flow rate may be constant or vary with time, and the measured flow rate value actually calculated or determined, and

storing said first compensating values in the memory (52).

2. A method according to claim 1, wherein the medium flow is passed through the flow passage (13) at a predetermined constant flow rate.

3. A method according to claim 2, wherein said predetermined flow rate value is zero.

4. A method according to any of the claims 1-3, wherein said condition of the medium is the temperature and/or the pressure of the medium in the flow passage (13).

5. A method according to any of the claims 1-4, wherein said medium is a liquid, such as water.

6. A method according to claim 4 or 5, wherein the medium within the flow passage (13) is heated to an elevated temperature and is thereafter allowed to cool, the measured flow rate values at said plurality of different condition values being calculated or determined by the electronic circuit means (23) during such cooling.

7. A method according to any of the claims 1-6, wherein the condition sensor (22) is calibrated at least at two different condition values prior to calculating or determining measured flow rate values of the medium in the flow passage (13) at different values of said condition.

8. A method according to any of the claims 1-7, wherein the medium within the flow passage (13) is initially exposed to widely varying temperature and/or pressure conditions for an extended period of time, such as a few or several days.

9. A method according to any of the claims 1-8, said method further comprising

calculating or determining by means of the electronic circuit means (23) subsequently to determining and storing said first compensating values a measured flow rate value of an unknown medium flow through the flow passage (13) based on the difference in velocities of transmission of the ultrasonic signals,

sensing or measuring the actual condition of the medium in the flow passage by means of the condition sensor (22), and

compensating the measured flow rate value of the unknown medium flow by the stored first compensating value associated with the condition value actually sensed or measured.

10. A method according to claim 9, wherein the measured flow rate value is further compensated by a second compensating value compensating for the dependency of the transmission velocity of ultrasonic signals on the varying condition of the medium.

11. A method according to any of the claims 1-10, wherein each ultrasonic signal is a pulse train, the flow rate value being determined by measuring the difference in time of detection of a pair of corresponding pulses in said trains, identical pulse trains being simultaneously emitted from oppositely arranged signal generating means.

12. A method according to any of the claims 1-11, wherein the measured flow rate value is calculated or determined based on a predetermined plurality of successive measurements of said difference in time of detection.

13. A method according to claim 12, wherein the measured flow rate value is calculated or determined based on the sum of said plurality of successive measurements.

14. A method according to claim 12 or 13, wherein the number of successive measurements is chosen in dependency of the flow rate being measured.

15. A method according to claim 14, wherein the number of successive measurements is reduced when the flow rate measured is increased.

**16.** A method according to claim 14 or 15, wherein the number of successive measurements is chosen on the basis of a preceding test measurement of the flow rate.

**17.** A flow meter for measuring a medium flow through a flow passage (13) defined therein and comprising

a sensor (22) for sensing condition values of the medium in the flow passage (13), ultrasound generating means (14) for generating ultrasonic signals and for directing such signals in opposite directions along at least part of the flow passage (13), means (14) for receiving ultrasonic signals having passed along said at least part of the flow passage (13), and electronic circuit means (23) arranged to calculate or determine a measured flow rate value of the medium in the flow passage (13) based on the difference in the velocity of transmitting the ultrasonic signals in said opposite directions, the circuit means (23) comprising means (44) arranged to compensate the calculated or determined measured flow rate value, characterized in that said circuit means (23) further comprises a memory (52) arranged to store a plurality of first compensating values for different values of said condition, said compensating means (44) is arranged to compensate the calculated or determined measured flow rate value by the first compensating value associated with the condition value sensed, and said circuit means (23), when a medium flow according to a predetermined flow rate course, in which the flow rate may be constant or vary with time, is provided through the flow passage (13) and said condition of the medium in the flow passage (13) is varied, is arranged to determine and store said first compensating values by calculating or determining measured flow rate values of the medium in the flow passage at each of a plurality of different values of said condition, and determining for each of said condition values a first compensating value being the difference between the corresponding flow rate value according to said predetermined course, in which the flow rate may be constant or vary with time, and the measured flow rate value actually calculated or determined, and storing said first compensating values in the memory (52).

**18.** A flow meter according to claim 17, wherein the sensor (22) for sensing condition values is a temperature and/or pressure sensor.

**19.** A flow meter according to claim 17 or 18 adapted to measure the volume flow of hot water flowing through said passage.

**20.** A flow meter according to any of the claims 17-19, wherein the cross-sectional area of the flow passage (13) is substantially constant, the cross-sectional area of an inlet end portion of the flow passage decreasing slightly in downstream direction towards said constant value.

**21.** A flow meter according to any of the claims 17-20, wherein the cross-sectional area of the flow passage (13) is substantially constant, the cross-sectional area of an outlet end portion of the flow passage increasing slightly from said constant area in the downstream direction.

**22.** A flow meter according to any of the claims 17-21, wherein at least one of the ultrasound generating and/or receiving means (14) comprises an electronic transducer (14a, 14b) including a housing (30) made from metal and defining an annular abutment surface (34), a vibrateable disc member (36) made from a piezoelectrical material, and means (39) for mounting the disc member in said housing so that a peripheral rim portion of the disc member and the annular abutment surface are positioned in overlapping relationship.

**23.** A flow meter according to claim 22, wherein the mounting means comprise means (39) for biasing the disc member (36) towards the annular abutment surface (34).

**24.** A flow meter according to claim 22 or 23, wherein the area of the abutment surface (34) being overlapped by the peripheral rim portion of the disc member (36) exceeds half the area of the disc member.

**25.** A flow meter according to any of the claims 22-24, wherein the mounting means comprise an adhesive by means of which a peripheral rim portion of the disc member is sealed to the annular abutment surface.

**26.** A flow meter according to any of the claims 22-24, wherein the disc member (36) is received in an insert member (33) of a non-metallic material, the insert member comprising a plane annular wall part, which is sandwiched between the annular abutment surface (34) and an adjacent side surface of the disc member (36), and a peripheral, cylindrical wall part (35) having its outer surface engaging with an inner cylindrical surface part of the housing (30) and having its inner surface engaging with a peripheral rim surface of the disc member (36).

27. A flow meter according to any of the claims 23-26, wherein said biassing means comprises a sheet member of metal, such as stainless steel (39) having its inner side surface fixed to the adjacent side surface of the disc member (36), for example by an adhesive or a glue, and having its peripheral rim portion fixed to said housing (30), for example by welding.

28. A flow meter according to claim 27, wherein the sheet member (39) has been pressed towards the annular abutment surface (34) of the housing prior to fixing its rim portion to the housing, whereby the disc member (36) is biassed towards the annular abutting surface (34) by the sheet member (39) when it has been fixed to the housing (30).

29. A flow meter according to any of the claims 17-28, wherein the ultrasound generating and receiving means comprise a pair of transducer units (14) arranged in inlet and outlet chambers (11, 12), respectively, said chambers (11, 12) being interconnected by the flow passage (13) having an axial length being several times longer than the distance from the transducers (14a, 14b) of the transducer units (14) and the walls of the respective inlet or outlet chamber (11, 12).

30. A flow meter according to claim 29, wherein the ultrasound transducers (14a, 14b) are of the type comprising a piezoelectrical disc for generation and detection of ultrasonic signals.

**Patentansprüche**

1. Verfahren zur Verbesserung der Genauigkeit der Meßergebnisse, die mittels eines solchen Durchflußmessers erzielbar sind, in dem ein Strömungskanal (13) für eine zu messende Mediumströmung gebildet ist, wobei der Durchflußmesser einen Sensor (22) zum Abfühlen eines sich ändernden Zustandes des durch den Strömungskanal fließenden Mediums, eine Einrichtung (14) zum Erzeugen von Ultraschallsignalen und zum Richten derartiger Signale in entgegengesetzte Richtungen längs wenigstens eines Abschnittes des Strömungskanals (13), eine Einrichtung (14) zum Empfang von Signalen, die längs des wenigstens einen Abschnittes des Strömungskanals gelaufen sind, und eine elektronische Schaltungsanordnung (23) zum Berechnen oder Bestimmen eines gemessenen Durchsatzwertes des Mediums, basierend auf der Differenz der Geschwindigkeiten der Übertragung der Ultraschallsignale in den entgegengesetzten Richtungen, besitzt, wobei die Schaltungsanordnung (23) eine Einrichtung (44) zum Kompensieren des berechneten oder bestimmten gemessenen Durchsatzwertes aufweist,

**dadurch gekennzeichnet,** daß

die Schaltungsanordnung (23) ferner einen Speicher (52) zum Abspeichern einer Vielzahl von ersten Kompensationswerten für verschiedene Werte des Zustands aufweist, wobei die Kompensierungseinrichtung zum Kompensieren des berechneten oder bestimmten gemessenen Durchsatzwertes durch den ersten Kompensationswert, welcher dem abgefühlten Zustandswert zugeordnet ist, vorgesehen ist und die ersten Kompensationswerte bestimmt werden durch Vorsehen einer Mediumströmung gemäß einem vorbestimmten Durchsatzvorgang, in welchem der Durchsatz konstant sein oder sich im Zeitverlauf ändern kann, durch den Strömungskanal (13), wobei der Zustand in dem Medium in dem Strömungskanal (13) variiert wird,
Berechnen oder Bestimmen der gemessenen Durchsatzwerte des Mediums in dem Strömungskanal bei jedem einer Vielzahl unterschiedlicher Werte des Zustandes mittels der elektronischen Schaltungsanordnung (23), Bestimmen eines ersten Kompensationswertes für jeden der Zustandswerte, der sich aus der Differenz zwischen dem zugehörigen Durchsatzwert gemäß dem vorbestimmtem Vorgang, in welchem der Durchsatz konstant sein oder sich im Zeitverlauf ändern kann, und dem tatsächlich berechneten oder bestimmten gemessenen Durchsatzwert ergibt, und Abspeichern der ersten Kompensationswerte in dem Speicher (52).

2. Verfahren nach Anspruch 1, bei dem die Mediumströmung mit einem vorbestimmten konstanten Durchsatz durch den Strömungskanal (13) geleitet wird.

3. Verfahren nach Anspruch 2, bei dem der vorbestimmte Durchsatzwert null ist.

4. Verfahren nach einem der Ansprüche 1 bis 3, bei dem der Zustand des Mediums die Temperatur und/oder den Druck des Mediums in dem Strömungskanal (13) ist.

5. Verfahren nach einem der Ansprüche 1 bis 4, bei dem das Medium eine Flüssigkeit, wie beispielsweise Wasser ist.

6. Verfahren nach Anspruch 4 oder 5, bei dem das Medium innerhalb des Strömungskanals (13) auf eine erhöhte Temperatur erhitzt und danach abkühlen gelassen wird, wobei die gemessenen Durchsatzwerte bei der Vielzahl von unterschiedlichen Zustandswerten mittels der elektronischen Schaltungsanordnung (23) während dieses Abkühlens berechnet oder bestimmt werden.

7. Verfahren nach einem der Ansprüche 1 bis 6, bei dem der Zustandssensor (22) wenigstens bei zwei verschiedenen Zustandswerten vor dem Berechnen oder Bestimmen gemessener Durchsatzwerte des Mediums in dem Strömungskanal (13) bei verschiedenen Werten des Zustands kalibriert wird.

8. Verfahren nach einem der Ansprüche 1 bis 7, bei dem das Medium innerhalb des Strömungskanals (13) anfangs weit variierenden Temperatur- und/ oder Druckbedingungen während einer ausgedehnten Zeitdauer, wie beispielsweise wenige oder mehrere Tage, ausgesetzt wird.

9. Verfahren nach einem der Ansprüche 1 bis 8, zudem weiterhin gehören:

    Berechnen oder Bestimmen eines gemessenen Durchsatzwertes einer unbekannten Mediumströmung durch den Strömungskanal (13), basierend auf der Differenz der Übertragungsgeschwindigkeiten der Ultraschallsignale mittels der elektronischen Schaltungsanordnung (23), anschließend an das Bestimmen und Abspeichern der ersten Kompensationswerte,
    Abfühlen oder Messen des tatsächlichen Zustandes des Mediums in dem Strömungskanal mittels des Zustandssensors (22), und
    Kompensieren des gemessenen Durchsatzwertes der unbekannten Mediumströmung mittels des gespeicherten ersten Kompensationswertes, der dem Zustandswert zugeordnet ist, welcher tatsächlich abgefühlt oder gemessen worden ist.

10. Verfahren nach Anspruch 9, bei dem der gemessene Durchsatzwert weiterhin mittels eines zweiten Kompensationswertes kompensiert wird, welcher die Abhängigkeit der Übertragungsgeschwindigkeit von Ultraschallsignalen von dem variierenden Zustand des Mediums kompensiert.

11. Verfahren nach einem der Ansprüche 1 bis 10, bei dem jedes Ultraschallsignal eine Impulsreihe ist, wobei der Durchsatzwert durch Messen des Zeitunterschieds bei der Erfassung eines Paars korrespondierender Pulse in den Reihen bestimmt wird, und wobei identische Impulsreihen gleichzeitig von einander gegenüber angeordneten Signalerzeugungseinrichtungen abgegeben werden.

12. Verfahren nach einem der Ansprüche 1 bis 11, bei dem der gemessene Durchsatzwert basierend auf einer vorbestimmten Vielzahl von sukzessiven Messungen der Zeitdifferenz der Erfassung berechnet oder bestimmt wird.

13. Verfahren nach Anspruch 12, bei dem der gemessene Durchsatzwert basierend auf der Summe der zahlreichen sukzessiven Messungen berechnet oder bestimmt wird.

14. Verfahren nach Anspruch 12 oder 13, bei dem die Zahl sukzessiver Messungen abhängig von dem gemessenen Durchsatz gewählt wird.

15. Verfahren nach Anspruch 14, bei dem die Zahl sukzessiver Messungen verringert wird, wenn der gemessene Durchsatz erhöht wird.

16. Verfahren nach Anspruch 14 oder 15, bei dem die Zahl sukzessiver Messungen auf der Grundlage einer vorhergehenden Testmessung des Durchsatzes gewählt wird.

17. Durchflußmesser zur Messung einer Mediumströmung durch einen darin gebildeten Strömungskanal (13) mit:

    einem Sensor (22) zum Abfühlen von Zustandswerten des Mediums im Strömungskanal (13),
    Ultraschallerzeugungseinrichtungen (14) zur Erzeugung von Ultraschallsignalen und zum Richten dieser Signale in entgegengesetzten Richtungen längs wenigstens eines Abschnitts des Strömungskanals (13),
    einer Einrichtung (14) zum Empfangen von Ultraschallsignalen, die längs des wenigstens einen Abschnittes des Strömungskanals (13) gelaufen sind, und
    eine elektronische Schaltungsanordnung (23) zum Berechnen oder Bestimmen eines gemessenen Durchsatzwertes des Mediums in dem Strömungskanal (13), basierend auf der Differenz der Geschwindigkeiten der Übertragung der Ultraschallsignale in den entgegengesetzten Richtungen, wobei die Schaltungsanordnung (23) eine Einrichtung (44) zum Kompensieren des berechneten oder bestimmten gemessenen Durchsatzwertes aufweist,

    **dadurch gekennzeichnet**, daß
    die Schaltungsanordnung (23) ferner einen Speicher (52) zum Abspeichern einer Vielzahl von ersten Kompensationswerten für verschiedene Werte des Zustands aufweist, wobei die Kompensierungseinrichtung (44) zur Kompensation des berechneten oder bestimmten gemessenen Durchsatzwertes durch den ersten Kompensationswert, welcher dem abgefühlten Zustandswert zugeordnet ist, ausgelegt ist, und wobei die Schaltungsanordnung (23), wenn eine Mediumströmung gemäß einem vorbestimmten Durchsatzvorgang, in welchem der Durchsatz konstant sein oder sich im Zeitverlauf ändern kann, durch den Strömungskanal (13) vorgesehen ist und der Zustand in dem Medium in dem Strömungskanal (13) variiert wird, zum Bestimmen und Speichern der ersten Kompensierungswerte ausgelegt ist, indem die bei jedem aus der Vielzahl von unterschiedlichen Zustandswerten gemessenen Durchsatzwerte des Mediums in dem Strömungskanal berechenbar oder bestimmbar sind, und für jeden der Zustandswerte, ein erster Kompensationswert bestimmbar ist, welcher die Differenz zwischen dem zugehörigen Durchsatzwert gemäß dem vorbestimmtem Vorgang, in welchem der Durchsatz konstant sein oder sich im Zeitverlauf ändern kann, und dem tatsächlich berechneten oder bestimmten gemessenen Durchsatzwert ist, und der erste Kompensationswert in dem Speicher (52) abgespeicherbar ist.

18. Durchflußmesser nach Anspruch 17, bei dem der Sensor (22) zum Abfühlen von Zustandswerten ein Temperatur- und/oder Drucksensor ist.

19. Durchflußmesser nach Anspruch 17 oder 18, durch den die Volumensströmung von heißem Wasser, die durch den Kanal fließt, meßbar ist.

20. Durchflußmesser nach einem der Ansprüche 17 bis 19, bei dem die Querschnittsfläche des Strömungskanals (13) im wesentlichen konstant ist, wobei die Querschnittsfläche eines Einlaßendabschnitts des Strömungskanals leicht in stromabwärtsseitiger Richtung zu dem konstanten Wert abnimmt.

21. Durchflußmesser nach einem der Ansprüche 17 bis 20, bei dem die Querschnittsfläche des Strömungskanals (13) im wesentlichen konstant ist, wobei die Querschnittsfläche eines Auslaßendabschnitts des Strömungskanals leicht von der konstanten Fläche in stromabwärtsseitiger Richtung zunimmt.

22. Durchflußmesser nach einem der Ansprüche 17 bis 21, bei dem wenigstens eine der Ultraschallerzeugungs- und/oder Empfangseinrichtungen (14) einen elektronischen Wandler (14a, 14b) mit einem aus Metall hergestellten und einer ringförmige Anlagefläche (34) bildenden Gehäuse (30), ein schwingungsfähiges Scheibenteil (36) aus einem piezoelektrischen Material und eine Einrichtung (39) aufweist, durch die das Scheibenteil in dem Gehäuse derart montierbar ist, daß ein Umfangskranzabschnitt des Scheibenteils und die ringförmige Anlagefläche in überlappender Zuordnung angeordnet sind.

23. Durchflußmesser nach Anspruch 22, bei dem die Montageeinrichtung einer Einrichtung (39) zum Vorspannen des Scheibenteils (36) in Richtung auf die ringförmige Anlagefläche (34) aufweist.

24. Durchflußmesser nach Anspruch 22 oder 23, bei dem die Fläche der Anlagefläche (34), die von dem Umfangskranzabschnitt des Scheibenteils (36) überlappt ist, die Fläche des Scheibenteils um die Hälfte übersteigt.

25. Durchflußmesser nach einem der Ansprüche 22 bis 24, bei dem die Montageeinrichtung ein Klebemittel aufweist, durch das ein Umfangskranzabschnitt des Scheibenteils an der ringförmigen Anlagefläche abgedichtet ist.

26. Durchflußmesser nach einem der Ansprüche 22 bis 24, bei dem das Scheibenteil (36) in einem Einsetzteil (33) aus einem nicht metallischen Material aufgenommen ist, wobei das Einsetzteil einen ebenen ringförmigen Wandabschnitt, der geschichtet zwischen der ringförmigen Anlagefläche (34) und einer angrenzenden Seitenfläche des Scheibenteils (36) angeordnet ist, und einen Umfangszylinderwandabschnitt (35) aufweist, dessen Außenfläche an einen inneren zylindrischen Oberflächenabschnitt des Gehäuses (30) angreift, und dessen Innenfläche an eine Umfangskranzfläche des Scheibenteils (36) angreift.

27. Durchflußmesser nach einem der Ansprüche 23 bis 26, bei dem die Vorspanneinrichtung ein dünnes Plattenteil aus Metall, wie beispielsweise Edelstahl (39), aufweist, dessen innere Seitenfläche an der angrenzenden Seitenfläche des Scheibenteils (36) beispielsweise mit einem Kleber oder einem Kitt befestigt ist, und dessen Umfangskranzabschnitt an dem Gehäuse (30) beispielsweise durch Schweißen befestigt ist.

28. Durchflußmesser nach Anspruch 27, bei dem das dünne Plattenteil (39) vor der Befestigung seines Kranzabschnitts an dem Gehäuse in Richtung auf die ringförmige Anlagefläche (34) gepreßt worden ist, wobei das Scheibenteil (36) in Richtung auf die ringförmige Anlagefläche (34) mittels des dünnen Plattenteils (39) vorgespannt ist, wenn es an dem Gehäuse (30) befestigt worden ist.

29. Durchflußmesser nach einem der Ansprüche 17 bis 28, bei dem die Ultraschallerzeugungs- und Empfangseinrichtung ein Paar Wandlereinheiten (14) aufweist, die entsprechend in Einlaß- und Auslaßkammern (11, 12) angeordnet sind, wobei die Kammern (11, 12) durch den Strömungskanal (13) miteinander in Verbindung stehen, welcher eine axiale Länge besitzt, die einige Male länger als der Abstand der Wandler (14a, 14b) der Wandlereinheiten (14) und der Wände der entsprechenden Einlaß- oder Auslaßkammer (11, 12) ist.

30. Durchflußmesser nach Anspruch 29, bei dem die Ultraschallwandler (14a, 14b) derart ausgebildet sind, daß sie eine piezoelektrische Scheibe zur Erzeugung und Erfassung von Ultraschallsignalen aufweisen.

**Revendications**

1. Procédé pour améliorer la précision des résultats de mesure pouvant être fournis par un débitmètre définissant en lui un passage d'écoulement (13) pour un écoulement de fluide devant être mesuré, lequel débitmètre comprend un capteur (22) pour détecter une condition variable du fluide circulant dans le passage d'écoulement, des moyens (14) pour produire des signaux ultrasoniques et pour envoyer de tels signaux dans des directions opposées le long d'au moins une partie du passage d'écoulement (13), des moyens (14) pour recevoir des signaux ayant circulé le long d'au moins une partie du passage d'écoulement, et des moyens formant circuit électronique (23) pour calculer ou déterminer une valeur du débit mesuré du fluide sur la base de la différence entre les vitesses d'émission des signaux ultrasoniques dans lesdites directions opposées, les moyens formant circuit (23) comprenant des moyens (44) pour compenser la valeur calculée ou déterminée du débit mesuré, caractérisé en ce que

  . lesdits moyens formant circuit (23) comprennent en outre une mémoire (52) pour mémoriser une pluralité de premières valeurs de compensation pour différentes valeurs de ladite condition,
  . lesdits moyens de compensation étant agencés de manière à compenser la valeur du débit calculé ou déterminé mesuré, par la première valeur de compensation associée à la valeur de condition détectée, et
  . lesdites premières valeurs de compensation sont déterminées par :

    . l'envoi d'un écoulement de fluide avec une allure de débit prédéterminée, selon laquelle le débit peut être constant ou varier dans le temps, dans le passage d'écoulement (13), lorsque ladite condition du fluide dans le passage d'écoulement (13) est modifiée,
    . le calcul ou la détermination, par les moyens formant circuit électronique (23), de valeurs mesurées du débit du fluide dans le passage d'écoulement pour chacune d'une pluralité de différentes valeurs de ladite condition,
    . la détermination, pour chacune desdites valeurs de condition, d'une première valeur de compensation qui est la différence entre la valeur de débit correspondante conforme à ladite allure prédéterminée, selon laquelle le débit peut être constant ou varier dans le temps, et la valeur mesurée du débit réellement calculée ou déterminée, et
    . la mémorisation desdites premières valeurs de compensation dans la mémoire (52).

2. Procédé selon la revendication 1, dans lequel l'écoulement du fluide traverse le passage d'écoulement (13) avec un débit constant prédéterminé.

3. Procédé selon la revendication 2, selon lequel ladite valeur prédéterminée du débit est nulle.

4. Procédé selon l'une quelconque des revendications 1-3, selon lequel ladite condition du fluide est la température et/ou la pression du fluide dans le passage d'écoulement (13).

5. Procédé selon l'une quelconque des revendications 1-4, selon lequel ledit fluide est un liquide, tel que de l'eau.

6. Procédé selon la revendication 4 ou 5, selon lequel on chauffe le fluide circulant dans le passage d'écoulement (13) à une température élevée, puis on le laisse se refroidir, les valeurs mesurées du débit pour ladite pluralité de valeurs différentes de condition étant calculées ou déterminées par les moyens formant circuit électronique (23) pendant un tel refroidissement.

7. Procédé selon l'une quelconque des revendications 1-6, selon lequel le capteur de condition (22) est calibré pour au moins deux valeurs différentes de la condition avant de calculer ou de déterminer des valeurs mesurées du débit du fluide dans le passage d'écoulement (13), pour des valeurs différentes de ladite condition.

8. Procédé selon l'une quelconque des revendications 1-7, selon lequel le fluide à l'intérieur du passage d'écoulement (13) est initialement exposé à des conditions très variables de température et/ou de pression pendant un intervalle de temps étendu, comme par exemple quelques jours ou plusieurs jours.

**9.** Procédé selon l'une quelconque des revendications 1-8, ledit procédé comprenant en outre :

. le calcul et la détermination par les moyens formant circuit électronique (23), à la suite de la détermination et de la mémorisation desdites premières valeurs de compensation, d'une valeur mesurée de débit d'un écoulement de fluide inconnu circulant dans le passage d'écoulement (13) sur la base de la différence des vitesses de transmission des signaux ultrasoniques,

. la détection ou la mesure de la condition réelle du fluide dans le passage d'écoulement au moyen du capteur de condition (22), et

. la compensation de la valeur mesurée du débit de l'écoulement de fluide inconnu par la première valeur de compensation mémorisée, associée à la valeur de la condition réellement détectée ou mesurée.

**10.** Procédé selon la revendication 9, selon lequel la valeur mesurée du débit est en outre compensée par une seconde valeur de compensation qui compense la dépendance de la vitesse de transmission de signaux ultrasoniques vis-à-vis de la condition variable du fluide.

**11.** Procédé selon l'une quelconque des revendications 1-10, selon lequel chaque signal ultrasonique est un train d'impulsions, la valeur du débit étant déterminée par la mesure de la différence de la durée de détection d'un couple d'impulsions correspondantes dans lesdits trains d'impulsions, les trains d'impulsions identiques étant émis simultanément par des moyens de production de signaux, disposés dans des positions opposées.

**12.** Procédé selon l'une quelconque des revendications 1-11, selon lequel la valeur mesurée du débit est calculée ou déterminée sur la base d'une pluralité prédéterminée de mesures successives de ladite différence entre les durées de détection.

**13.** Procédé selon la revendication 12, selon lequel la valeur mesurée du débit est calculée ou déterminée sur la base de la somme de ladite pluralité de mesures successives.

**14.** Procédé selon la revendication 12 ou 13, selon lequel le nombre de mesures successives est choisi en fonction du débit mesuré.

**15.** Procédé selon la revendication 14, selon lequel le nombre de mesures successives est réduit lorsque le débit mesuré est accru.

**16.** Procédé selon la revendication 14 ou 15, selon lequel le nombre de mesures successives est choisi sur la base d'une mesure de test précédente du débit.

**17.** Débitmètre pour la mesure d'un écoulement de fluide dans un passage d'écoulement (13) défini dans ce débitmètre et comprenant

. un capteur (22) pour détecter des valeurs de la condition du fluide dans le passage d'écoulement (13),

. des moyens de production d'ultrasons (14) pour produire des signaux ultrasoniques et diriger de tels signaux dans des directions opposées le long d'au moins une partie du passage d'écoulement (13),

. des moyens (14) pour recevoir des signaux ultrasoniques ayant traversé au moins ladite partie du passage d'écoulement (13), et

. des moyens formant circuit électronique (23) agencés de manière à calculer et déterminer une valeur mesurée du débit du fluide dans le passage d'écoulement (13) sur la base de la différence entre les vitesses de transmission des signaux ultrasoniques dans lesdites directions opposées, les moyens formant circuit (23) comprenant des moyens (44) agencés de manière à compenser la valeur mesurée de débit calculée ou déterminée,

caractérisé en ce que

. lesdits moyens formant circuit (23) comprennent en outre une mémoire (52) agencée de manière à mémoriser une pluralité de premières valeurs de compensation pour différentes valeurs de ladite condition,

. lesdits moyens de compensation (44) sont agencés de manière à compenser la valeur mesurée du débit, calculée ou déterminée, par la première valeur de compensation associée à la valeur de la condition détectée, et

. lesdits moyens formant circuit (23) sont agencés de manière à déterminer et mémoriser, dans le cas où un écoulement de fluide conformément à une allure de débit prédéterminée, selon laquelle le débit peut être constant ou varie dans le temps, existe dans le passage d'écoulement (13) et ladite condition du fluide dans le passage d'écoulement (13) est modifiée, lesdites premières valeurs de compensation par :

. le calcul ou la détermination de valeurs mesurées du débit du fluide dans le passage d'écoulement en chacune d'une pluralité de valeurs différentes de ladite condition, et

. la détermination, pour chacune desdites valeurs de la condition, d'une première valeur de compensation qui est la différence entre la valeur de débit correspondante conformément à ladite allure prédéterminée, selon laquelle le débit peut être constant ou varie dans le temps, et la valeur mesurée du débit réellement calculée ou déterminée, et

. la mémorisation desdites premières valeurs de compensation dans la mémoire (52).

18. Débitmètre selon la revendication 17, selon lequel le capteur (22) servant à détecter des valeurs de la condition est un capteur de température et/ou de pression.

19. Débitmètre selon la revendication 17 ou 18 adapté pour mesurer le débit volumique d'eau chaude circulant dans ledit passage.

20. Débitmètre selon l'une quelconque des revendications 17-19, dans lequel la section en coupe transversale du passage d'écoulement (13) est essentiellement constante, la section en coupe transversale d'une partie d'extrémité d'entrée du passage d'écoulement diminuant légèrement en direction de ladite valeur constante, vers l'aval.

21. Débitmètre selon l'une quelconque des revendications 17-20, selon lequel la section en coupe transversale du passage d'écoulement (13) est essentiellement constante, la section en coupe transversale d'une partie d'extrémité de sortie du passage d'écoulement augmentant légèrement à partir de ladite section constante, en direction de l'aval.

22. Débitmètre selon l'une quelconque des revendications 17-21, selon lequel au moins l'un des moyens (14) de production et/ou de réception des ultrasons comprend un transducteur électronique (14a, 14b) incluant un boîtier (30) formé d'un métal et définissant une surface annulaire de butée (34), un élément de disque apte à vibrer (36) formé d'un matériau piézoélectrique, des moyens (39) pour monter l'élément en forme de disque dans ledit boîtier de sorte qu'une partie formant rebord périphérique de l'élément en forme de disque et la surface annulaire de butée sont positionnées en étant en superposition.

23. Débitmètre selon la revendication 22, selon lequel les moyens de montage comprennent des moyens (39) pour solliciter l'élément en forme de disque (36) en direction de la surface annulaire de butée (34).

24. Débitmètre selon la revendication 22 ou 23, dans lequel la zone de la surface de butée (34), sur laquelle est superposée la partie formant rebord périphérique de l'élément en forme de disque (36), dépasse la moitié de l'aire de l'élément en forme de disque.

25. Débitmètre selon l'une quelconque des revendications 22-24, dans lequel les moyens de montage comprennent un adhésif à l'aide duquel une partie formant rebord périphérique de l'élément en forme de disque est fixée de façon étanche à la surface annulaire de butée.

26. Débitmètre selon l'une quelconque des revendications 22-24, selon lequel l'élément en forme de disque (36) est logé dans un élément formant insert (33) formé d'un matériau non métallique, l'élément formant insert comprenant un élément de paroi annulaire plat, qui est enserré entre la surface annulaire de butée (34) et une surface latérale adjacente d'un élément en forme de disque (36), et un élément de paroi cylindrique périphérique (35) dont la surface extérieure s'applique contre un élément de surface cylindrique intérieur du boîtier (30) et dont la surface intérieure s'applique contre une surface de rebord périphérique de l'élément en forme de disque (36).

27. Débitmètre selon l'une quelconque des revendications 23-26, selon lequel ledit moyen de sollicitation comprend un élément de tôle métallique, par exemple en acier inoxydable (39), dont la surface latérale intérieure est fixée à la surface latérale adjacente de l'élément en forme de disque (36), par exemple par un adhésif ou de la colle, et dont la partie formant rebord périphérique est fixée audit boîtier (30),par exemple par soudage.

28. Débitmètre selon la revendication 27, dans lequel l'élément en forme de feuille (39) a été repoussé contre la surface annulaire de butée (34) du boîtier avant la fixation de sa partie formant rebord au boîtier, l'élément en forme de disque (36) étant sollicité vers la surface annulaire de butée (34) par l'élément en forme de feuille (39), lorsqu'il a été fixé au boîtier (30).

29. Débitmètre selon l'une quelconque des revendications 17-28, selon lequel les moyens de production et de réception des ultrasons comprennent un couple d'unités à transducteurs (14) disposées respectivement dans des chambres d'entrée et de sortie (11, 12), lesdites chambres (11, 12) étant interconnectées par le passage d'écoulement (13) possédant une longueur axiale qui est une longueur égale à un multiple de la distance entre les transducteurs (14a, 14b) des unités à transducteurs (14) et les parois de la chambre respective d'entrée et de sortie (11, 12).

30. Débitmètre selon la revendication 29, dans lequel les transducteurs à ultrasons (14a, 14b) sont du type comprenant un disque piézoélectrique pour la production et la détection de signaux ultrasoniques.

# Fig. 1

# Fig. 2

EP 0 657 021 B1

**Fig. 3**

**Fig. 4**

**Fig.5**

**Fig. 6**

19

**Fig. 7**

**Fig. 8**

**Fig. 9**

EP 0 657 021 B1

# Fig. 10

Correction
value

# Fig. 11

Correction
value